(19) Europäisches Patentamt
European Patent Office
Office européen des brevets

(11) Veröffentlichungsnummer: **0 281 681 B1**

(12) **EUROPÄISCHE PATENTSCHRIFT**

(45) Veröffentlichungstag der Patentschrift: **25.03.92**

(51) Int. Cl.[5]: **C08G 77/38**, C09D 183/05

(21) Anmeldenummer: **87118438.8**

(22) Anmeldetag: **12.12.87**

Die Akte enthält technische Angaben, die nach dem Eingang der Anmeldung eingereicht wurden und die nicht in dieser Patentschrift enthalten sind.

# (54) Polysiloxane mit über SiC-Gruppen gebundenen (Meth)acrylsäureestergruppen und deren Verwendung als strahlenhärtbare Beschichtungsmittel für flächige Träger.

(30) Priorität: **06.02.87 DE 3703648**

(43) Veröffentlichungstag der Anmeldung:
**14.09.88 Patentblatt 88/37**

(45) Bekanntmachung des Hinweises auf die Patenterteilung:
**25.03.92 Patentblatt 92/13**

(84) Benannte Vertragsstaaten:
**BE DE ES FR GB IT NL**

(56) Entgegenhaltungen:
**EP-A- 0 215 368**
**GB-A- 2 041 389**
**GB-A- 2 067 210**
**US-A- 4 558 082**
**US-A- 4 568 566**

**FARBE UND LACK, Band 88, August 1982, Seiten 632-635, Hannover; A. JÄGER et al.: "Strahlenhärtung von Siliconen"**

(73) Patentinhaber: **Th. Goldschmidt AG**
**Goldschmidtstrasse 100 Postfach 101461**
**W-4300 Essen 1(DE)**

(72) Erfinder: **Jachmann, Jürgen**
**Mont-Cenis-Strasse 265**
**W-4690 Herne(DE)**
Erfinder: **Weitemeyer, Christian, Dr.**
**Sundernholz 67**
**W-4300 Essen(DE)**
Erfinder: **Wewers, Dietmar, Dr.**
**Fernewaldstrasse 194**
**W-4250 Bottrop(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 281 681 B1

## Beschreibung

Die Erfindung betrifft neue Polysiloxane mit über SiC-Gruppen gebundenen (Meth)-acrylsäureestergruppen. Die Erfindung betrifft ferner die Verwendung dieser Polysiloxane als strahlenhärtbare abhäsive Beschichtungsmittel für flächige Träger.

Abhäsive Beschichtungsmassen werden in größerem Umfang zur Beschichtung insbesondere von flächigen Materialien verwendet, um die Adhäsionsneigung von adhärierenden Produkten gegenüber diesen Oberflächen zu verringern. Abhäsive Beschichtungsmassen werden beispielsweise zur Beschichtung von Papieren oder Folien verwendet, welche als Träger für selbstklebende Etiketten dienen sollen. Die mit einem Haftkleber versehenen Etiketten haften auf der beschichteten Oberfläche noch in genügendem Maße, um die Handhabung der die Klebeetiketten aufweisenden Trägerfolien zu ermöglichen. Die Etiketten müssen jedoch von der beschichteten Trägerfolie abziehbar sein, ohne daß ihre Klebkraft für die spätere Verwendung wesentlich beeinträchtigt wird. Weitere Anwendungsmöglichkeiten für abhäsive Beschichtungsmassen sind Verpackungspapiere, die insbesondere zur Verpackung von klebrigen Gütern dienen. Derartige abhäsive Papiere oder Folien werden beispielsweise zum Verpacken von Lebensmitteln oder zum Verpacken technischer Produkte, wie z.B. Bitumen, verwendet.

Als abhäsive Beschichtungsmassen haben sich vernetzbare Organopolysiloxane, insbesondere mit Acrylestergruppen modifizierte strahlenhärtbare Organopolysiloxane erwiesen.

So ist aus der DE-PS 29 48 708 ein Verfahren zur Herstellung von mit Pentaerythrittriacrylsäure- oder Pentaerythrittrimethacrylsäureestern modifizierten Organopolysiloxanen aus Organochlorpolysiloxanen, gegebenenfalls unter Zusatz von HCl-bindenden Neutralisationsmitteln bekannt, bei dem man Organopolysiloxane der Formel

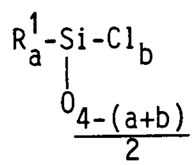

($R^1$ = Alkyl mit 1 bis 4 Kohlenstoffatomen, Vinyl und/oder Phenyl, mit der Maßgabe, daß mindestens 90 Mol-% der Gruppen $R^1$ Methyl sind; a = Wert von 1,8 bis 2,2; b = Wert von 0,004 bis 0,5) zunächst mit, bezogen auf SiCl-Gruppen, mindestens 2molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Eine nach diesem Verfahren hergestellte Beschichtungsmasse zeigt bereits gute abhäsive Eigenschaften, wobei in Kontakt mit der Beschichtungsmasse stehende Klebebänder ihre Klebkraft gegenüber unbehandelten Substraten weitgehend behalten. Es hat sich jedoch gezeigt, daß die Eigenschaft der Abhäsivität immer im Zusammenhang mit dem chemischen Aufbau und der Struktur des Klebstoffes zu sehen ist, gegenüber dem das Beschichtungsmittel abhäsive Eigenschaften aufweisen soll. Das in der DE-PS 29 48 708 beschriebene abhäsive Beschichtungsmittel konnte deshalb nicht in allen Fällen befriedigende Ergebnisse liefern, da es in seinen Eigenschaften den verschiedenen Klebstoffen nicht angepaßt werden konnte.

Verbesserte Eigenschaften weisen bereits (meth)acrylsäureestermodifizierte Organopolysiloxangemische auf, welche dadurch gekennzeichnet sind, daß sie aus einem äquilibrierten Organopolysiloxan mit im Mittel > 25 bis < 200 Si-Atomen, aus 2 bis 30 Gew.-% Organopolysiloxanen mit im Mittel 2 bis 25 Si-Atomen und aus 2 bis 30 Gew.-% Organopolysiloxanen mit im Mittel 200 bis 2000 Si-Atomen bestehen. Den in diesem ternären Gemisch enthaltenen Organopolysiloxanen kommen dabei unterschiedliche Aufgaben zu. Die niedrigmolekulare Fraktion hat im wesentlichen die Aufgabe der Adhäsion der Beschichtungsmasse auf dem Substrat zu erfüllen. Die hochmolekulare Fraktion dient vorwiegend der Erlangung der gewünschten Abhäsivität der Beschichtungsmasse. Die mittlere Fraktion ist die härtbare Matrix, welche insbesondere für die physikalischen Eigenschaften der Beschichtungsmasse verantwortlich ist. Es ist dem Fachmann verständlich, daß dies nur eine vereinfachende Beschreibung der Eigenschaften und Aufgaben der drei verschiedenen Fraktionen ist, da die komplexen Eigenschaften, die ein abhäsives Beschichtungsmittel aufweisen muß, nur im Zusammenwirken der drei Komponenten erhalten werden können. Mit dem modifizierten Organopolysiloxangemisch gemäß DE-PS 34 26 087 ist es möglich geworden, einerseits die

abhäsiven Eigenschaften des Gemisches gegenüber klebenden Oberflächen und andererseits die adhäsiven Eigenschaften gegenüber dem Substrat, auf welchem das Beschichtungsmittel aufgebracht und auf dem es ausgehärtet wird, zu verbessern. Jedoch zeigt sich auch bei diesen Beschichtungsmassen, daß sie in ihren Eigenschaften den verschiedenen Klebstoffen noch nicht genügend angepaßt werden können.

In der EU-OS 0 159 683 werden elektronenstrahlhärtbare, flüssige Beschichtungsmittel beschrieben. Diese sollen enthalten:

1. 60 bis 95 Teile eines Organopolysiloxans mit mehr als etwa 25 Siloxangruppen pro Molekül und 2 bis 10 Teile umgesetzter Carbinolgruppen pro Molekül, wobei die restlichen am Silicium befindlichen Substituenten Kohlenwasserstoffgruppen mit 1 bis 20 Kohlenstoffatomen sind; dabei werden unter dem Begriff der umgesetzten Carbinolgruppen Ester der Acrylsäure, Methacrylsäure oder Gemische oder Ether eines Hydroxyalkylesters dieser Säuren, wobei die Alkylgruppe 2 bis 4 Kohlenstoffatome enthält, verstanden; nichtumgesetzte Carbinolgruppen sollen im wesentlichen nicht mehr vorhanden sein, so daß die Hydroxylzahl < 10 ist;
2. 3 bis 25 Teile eines Polyesters eines mehrwertigen Alkohols mit Acrylsäure, Methacrylsäure oder Gemischen hiervon, wobei der mehrwertige Alkohol 2 bis 4 Hydroxylgruppen pro Molekül und ein Molekulargewicht von < 1200 aufweisen soll;
3. 1 bis 10 Teile Acrylsäure, Methacrylsäure oder Mischungen dieser Säuren.

Die zusätzliche Verwendung des (Meth)acrylsäureesters eines Polyalkohols erhöht zwar die Geschwindigkeit der Aushärtung, wirkt sich aber nachteilig auf die Flexibilität und Abhäsivität des Beschichtungsmittels infolge Erhöhung des organischen Anteils aus. Ein zusätzlicher Nachteil besteht im Gehalt an freier Acrylsäure oder Methacrylsäure. Dieser Gehalt führt zu einer Geruchsbelästigung und erschwert die Verarbeitung beim Auftragen auf das zu beschichtende Material.

Organopolysiloxane mit Acrylsäureestergruppen sind aufgrund ihrer Strahlenhärtbarkeit für eine Reihe weiterer Anwendungsmöglichkeiten beschrieben. Mit Acrylsäureestergruppen modifizierte Organopolysiloxane werden als Überzuglacke zum Ein- und Umgießen elektrischer und elektronischer Bauteile sowie zur Herstellung geformter Gegenstände verwendet. Zu dem möglichen strukturellen Aufbau derartiger acrylsäureestergruppenmodifizierter Polysiloxane werden die folgenden Offenlegungs-, Auslege- und Patentschriften genannt:

Die DE-AS 23 35 118 betrifft gegebenenfalls substituierte Acrylatgruppen enthaltende Organopolysiloxane der allgemeinen Formel

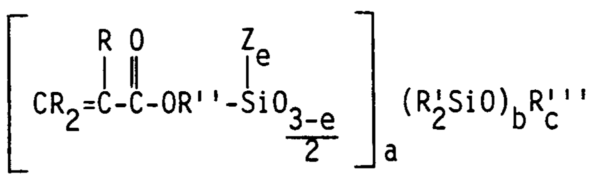

(R = Wasserstoff oder einwertige Kohlenwasserstoffreste mit 1 bis 12 C-Atomen; R′ = einwertige, gegebenenfalls halogenierte Kohlenwasserstoffreste oder Cyanalkylreste mit 1 bis 8 C-Atomen; R″ = zweiwertige Kohlenwasserstoffreste mit 1 bis 18 C-Atomen oder C-O-C-Bindungen enthaltende zweiwertige Kohlenwasserstoffreste; R‴ = R⁗$O_{0,5}$ oder $R'_3$ $SiO_{0,5}$; Z = OR⁗, R⁗ oder $OSiR'_3$ ; R⁗ = Alkylrest mit 1 bis 12 C-Atomen; a und b jeweils Zahlen von 1 bis 20 000; c = Zahl von 0 bis 3; e = Zahl von 0 bis 2; mindestens einer der Reste Z = OR⁗, wenn c = 0). Die Siloxanpolymeren können als Zwischenprodukte bei der Herstellung von Copolymeren eingesetzt werden, die Organopolysiloxansegmente enthalten und die als Beschichtungsmassen Verwendung finden. Außerdem können diese acrylatfunktionellen Siloxanpolymeren als Schlichtemittel und als Schutzüberzugsmassen für Papier und Gewebe dienen. Diese Produkte sind jedoch zur Herstellung abhäsiver Beschichtungsmittel ungeeignet. Die linearen diacrylatmodifizierten Polysiloxane gemäß DE-AS 23 35 118 weisen zudem definitionsgemäß Alkoxygruppen auf, die hydrolytisch abgespalten werden können und zur weiteren Vernetzung der Polysiloxane unter Verschlechterung der für eine Beschichtungsmasse wichtigen elastischen Eigenschaften führen.

Aus der DE-OS 30 44 237 sind Polysiloxane mit seitenständigen Acrylsäureestergruppen bekannt, welche durch Umsetzung von epoxyfunktionellen Siloxanen bestimmter Struktur mit Acrylsäure hergestellt werden können. Die erhaltenen Produkte sind strahlungshärtbar. Sie können als niedrigviskose Lacke zur Aufbringung über übliche Drucktinten auf Ölbasis verwendet werden. Die Produkte sind als abhäsive Beschichtungsmassen nur mit erheblichen Einschränkungen brauchbar, da jeder Acrylsäureestergruppe eine Hydroxylgruppe gegenübersteht.

In der US-PS 4 568 566 sind härtbare Siliconzubereitungen beschrieben. Diese bestehen aus

a) 75 bis 100 Mol-% chemisch gebundenen Siloxyeinheiten der Formel $R_3SiO_{0,5}$, $RSiO_{1,5}$ und $SiO_2$ sowie

b) 0 bis 25 Mol-% $R_2SiO$-Einheiten, wobei eine Anzahl der Einheiten R die Formel

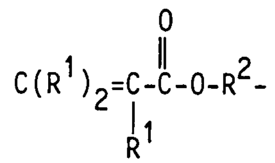

aufweisen, wobei $R^1$ ein Wasserstoff- oder ein Kohlenwasserstoffrest mit 1 bis 12 Kohlenstoffatomen und $R^2$ ein zweiwertiger Kohlenwasserstoffrest oder ein Oxyalkylenrest ist. Diese härtbaren Zubereitungen werden insbesondere zum Überziehen elektronischer Bauteile und als Beschichtungsmaterial für Lichtleitfasern verwendet. Aufgrund des zu geringen Gehaltes an $R_2SiO$-Einheiten sind sie als abhäsive Beschichtungsmittel für flächige Träger nicht geeignet.

Gegenstand der EU-OS 0 152 179 ist eine zu einem Elastomer härtbare Siliconzubereitung. Diese besteht aus a) einem Siliconharz mit linearem Aufbau und im Mittel wenigstens 150 Siloxaneinheiten sowie endständig gebundenen Acrylsäuregruppen, wobei die dazwischen befindliche Region frei von Acrylsäuregruppen sein soll, b) wenigstens 10 % feinteiliger Kieselsäure und c) einem Photoinitiator. Diese Materialien sollen als Klebmittel und als Vergußmassen verwendet werden.

Schließlich ist auf die EU-OS 0 169 592 zu verweisen. Diese EU-OS betrifft eine optische Glasfaser mit einer Kunststoffbedeckung, mit einer Glasfaser und einer umhüllenden Schicht aus einem Kunstgummi mit einer Brechzahl, die höher als die der äußeren Schicht der Glasfaser ist, wobei das Kunstgummi aus einer härtbaren Kunststoffzusammensetzung gebildet ist, die ein Copolymer aufweist, das als monomere Einheiten Dimethylsiloxan und mindestens ein Siloxan aus der Gruppe enthält, die durch Methyl-phenylsiloxan und Diphenylsiloxan gebildet ist, wobei das Siloxancopolymer mindestens zwei Acrylatestergruppen je Molekül aufweist, mit dem Kennzeichen, daß die härtbare Kunststoffzusammensetzung außerdem ein Polyurethanacrylat mit einem mittleren Molekulargewicht über 3000 aufweist. Das im Patentanspruch genannte Polysiloxan kann dabei folgende Formel haben

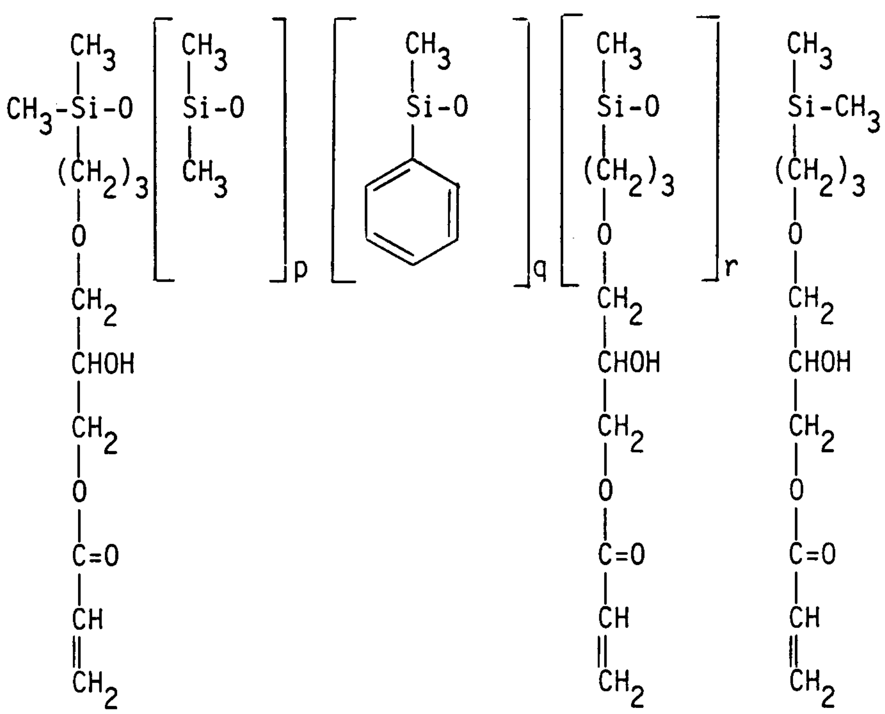

Wesentliche Bedingung ist, daß diese Polysiloxane an Silicium gebundene Phenylgruppen aufweisen. Der Gehalt an Phenylgruppen ist notwendig, um den Brechungsindex der Beschichtungsmasse an den des

Glases der Lichtleitfaser anzugleichen. Von der Verwendung dieser Siloxane in Kombination mit einem Polyurethanacrylat zur Beschichtung optischer Glasfasern kann nicht auf die mögliche Verwendbarkeit derartiger Verbindungen als abhäsive Beschichtungsmassen geschlossen werden.

In der Zeitschrift "Makromolekulare Chemie" (Rapid Communication), 7, (1986), 703 bis 707, wird die Synthese linearer Methylpolysiloxane mit endständigen Methacrylsäureestergruppen beschrieben. Dabei wird zunächst an $\alpha,\omega$-Wasserstoffdimethylsiloxan Allylepoxypropylether in Gegenwart von Chloroplatinsäure addiert. Das entstandene Diepoxyd wird anschließend mit Methacrylsäure in Gegenwart von Chromdiisopropylsalicylat zu den gewünschten Methacrylsäureestern umgesetzt. Diese Ester können in zwei isomeren Formen vorliegen:

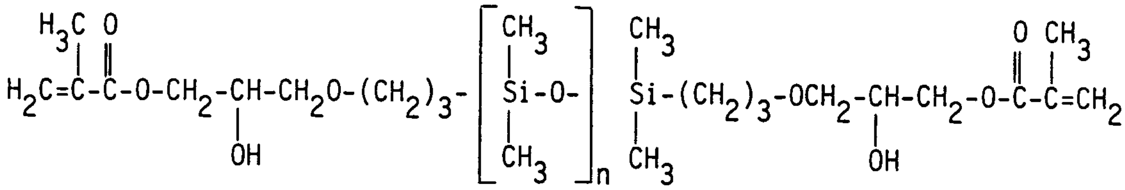

($\alpha$-isomer)

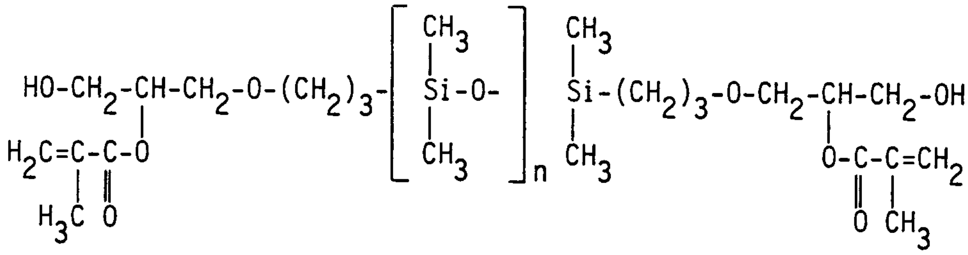

($\beta$-isomer)

Soweit nach den Verfahren des Standes der Technik von epoxyfunktionellen Siloxanen ausgehend (Meth)acrylsäureester hergestellt werden, erfolgt die Umsetzung der Epoxygruppen mit (Meth)acrylsäure. Dabei entstehen durch Öffnung des Epoxydringes (Meth)acrylsäuremonoester mit einer vicinalen Hydroxylgruppe.

Der Erfindung liegt die Aufgabe zugrunde, abhäsive Beschichtungsmassen auf der Grundlage (meth)-acrylsäureestermodifizierter Organopolysiloxane aufzufinden, die gegenüber den aus dem Stand der Technik bekannten Beschichtungsmassen verbesserte Eigenschaften aufweisen.

Der Erfindung liegt insbesondere die Aufgabe zugrunde, Beschichtungsmassen aufzufinden, welche unterschiedlichen adhärierenden Produkten (Klebstoffen) angepaßt werden können.

Die gesuchten mit (Meth)acrylsäureestergruppen modifizierten Organopolysiloxane sollen dabei insbesondere folgende Eigenschaftskombination aufweisen:

1. befriedigende Haftung auf dem jeweils zu beschichtenden Träger
2. hohe Aushärtungsgeschwindigkeit auf dem Träger
3. chemische und physikalische Beständigkeit der ausgehärteten Beschichtung
4. hohe Flexibilität der ausgehärteten Beschichtung
5. abhäsive Eigenschaften gegenüber klebenden Produkten, Anpaßbarkeit der abhäsiven Beschichtung an den chemischen Charakter des Klebstoffes
6. Einstellbarkeit des gewünschten Grades der Abhäsivität.

Diese Eigenschaftskombination ist bei Polysiloxanen, welche über SiC-Gruppen gebundene (Meth)-acrylsäureestergruppen aufweisen, zu finden, die erhältlich sind durch Umsetzung von epoxyfunktionellen Polysiloxanen der allgemeinen Formel

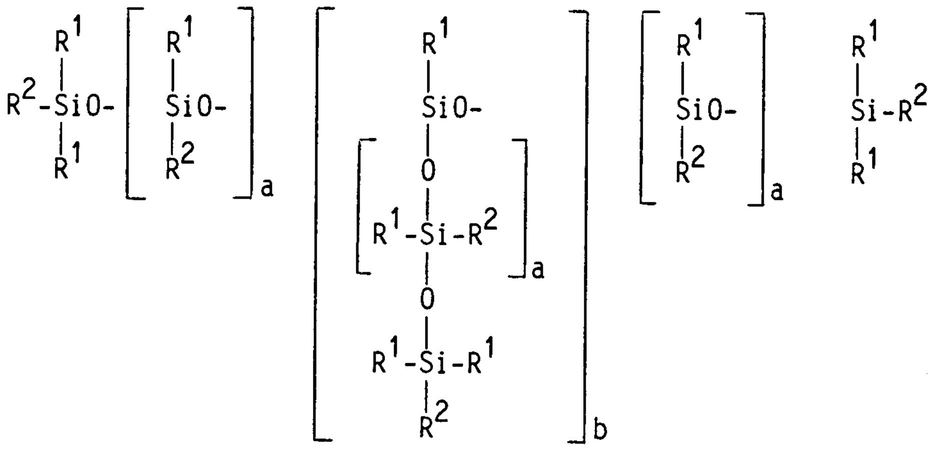

I

wobei

- $R^1$ gleiche oder verschiedene niedere Alkylreste mit 1 bis 4 Kohlenstoffatomen oder Phenylreste sind,
- $R^2$ gleich $R^1$ ist oder den Rest $R^3$ bedeutet, wobei die Reste $R^3$ zu 70 bis 100 % epoxyfunktionelle Reste und zu 30 bis 0 % Alkylreste mit 2 bis 10 Kohlenstoffatomen oder Wasserstoffreste sind, mit der Maßgabe, daß im durchschnittlichen Molekül mindestens 1,5 Epoxygruppen enthalten sind,
- a einen Wert von 1 bis 1000 und
- b einen Wert von 0 bis 10 hat,

mit solchen Mengen eines Säuregemisches, bestehend aus 10 bis 90 Mol-% (Meth)acrylsäureanhydrid und 90 bis 10 Mol-% (Meth)acrylsäure, wobei die Summe 100 Mol-% ergeben muß, daß auf n Epoxydäquivalente 0,8 bis 1,9 n, vorzugsweise 1,1 bis 1,9 n, Säureäquivalente entfallen, bei erhöhten Temperaturen, gegebenenfalls in Gegenwart von Lösungsmitteln und üblichen Veresterungskatalysatoren.

Bei der Umsetzung von epoxyfunktionell modifizierten Siloxanen mit einem Säuregemisch aus (Meth)-acrylsäureanhydrid und (Meth)acrylsäure bilden sich (Meth)acrylsäureester nach folgendem Reaktionsschema:

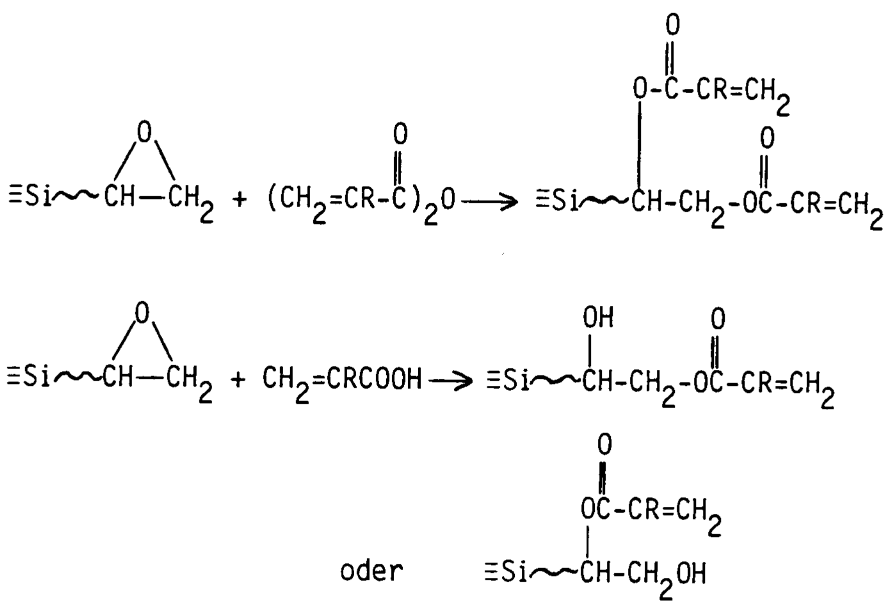

oder

R = H, $CH_3$

Die erfindungsgemäßen modifizierten Organopolysiloxane weisen - je nach Zusammensetzung des Gemisches, bestehend aus (Meth)acrylsäureanhydrid und (Meth)acrylsäure und eingesetzter Menge des Gemisches (bezogen auf Epoxydgruppen) - vorbestimmbare Mengen (Meth)acrylsäurediester-, (Meth)-acrylsäuremonoester-, Hydroxyl- und, gegebenenfalls, nicht umgesetzte Epoxydgruppen auf. Da es sich gezeigt hat, daß die Abhäsivität mit steigender Anzahl (Meth)acrylsäureestergruppen zunimmt, die Verträglichkeit mit dem Untergrund sich jedoch mit steigendem Gehalt an Hydroxyl- und gegebenenfalls Epoxydgruppen verbessert, gelingt es in einfacher Weise, diese einander gegenläufigen Eigenschaften in ein ausgewogenes, anwendungstechnisch erwünschtes Verhältnis zu bringen.

Durch das Verhältnis der Mono- und Diestergruppen kann ferner die Vernetzungsdichte der ausgehärteten Siloxane beeinflußt werden. Unterschiede in der Vernetzungsdichte ergeben unterschiedliche physikalische Eigenschaften, wie Erhöhung der Härte und der mechanischen Widerstandsfähigkeit bei Erhöhung der Vernetzungsdichte; Absenken des Glaspunktes und Elastifizierung bei Herabsetzung der Vernetzungsdichte.

Von besonderer Bedeutung für die Definition der erfindungsgemäßen Verbindungen sind somit die Angaben über die Zusammensetzung des Gemisches aus (Meth)acrylsäureanhydrid und (Meth)acrylsäure und die Menge dieses Gemisches, die zur Herstellung der erfindungsgemäßen Verbindungen benötigt wird, in Relation zu den Epoxydgruppen.

Die Zusammensetzung des Gemisches kann innerhalb folgender Grenzen variieren:

| | | | |
|---|---|---|---|
| (Meth)acrylsäureanhydrid | 10 Mol-% | ⟶ | 90 Mol-% |
| (Meth)acrylsäure | 90 Mol-% | ⟶ | 10 Mol-% |
| | 100 Mol-% | | 100 Mol-% |

Die Summe muß immer 100 Mol-% ergeben.

Da (Meth)acrylsäureanhydrid 2 Säuregruppen, (Meth)acrylsäure 1 Säuregruppe zur Verfügung stellt, enthält das Gemisch aus

10 Mol-% (Meth)acrylsäureanhydrid und
90 Mol-% (Meth)acrylsäure (Gemisch a)
1,1 Säuregruppen je 100 Mol-%,
das Gemisch aus
90 Mol-% (Meth)acrylsäureanhydrid und
10 Mol-% (Meth)acrylsäure (Gemisch b)
1,9 Säuregruppen je 100 Mol-%.

Die Menge des zu verwendenden Gemisches ergibt sich aus dem zweiten Merkmal, daß auf n Epoxydäquivalente 0,8 bis 1,9 n Säureäquivalente entfallen sollen. Will man beispielsweise 1,5 Säureäquivalente je Epoxydgruppe einsetzen, muß man von Gemisch a 1,36 Mol, von Gemisch b aber 0,79 Mol einsetzen. Es ist ersichtlich, daß beide Merkmale dem Fachmann ohne weiteres ermöglichen, den Gehalt des Polysiloxans an Diester-, Monoester-, Hydroxyl- und gegebenenfalls restlichen Epoxydgruppen in jeweils gewünschter Weise einzustellen.

Eine weitere Beeinflussungsmöglichkeit der abhäsiven Eigenschaften ist dadurch gegeben, daß bis zu 30 % der Reste $R^3$ gegebenenfalls substituierte Alkylreste mit 2 bis 20 Kohlenstoffatomen sein können. Durch die Anwesenheit der Alkylreste mit 2 bis 20 Kohlenstoffatomen wird der organische Charakter der modifizierten Polysiloxane erhöht. Dabei kann man im allgemeinen davon ausgehen, daß sowohl mit steigendem Gehalt an Alkylresten als auch mit steigender Länge der Kette der Alkylreste die abhäsiven Eigenschaften des Polysiloxans gezielt vermindert werden können. Beispiele geeigneter, gegebenenfalls substituierter Alkylreste sind Ethyl-, Propyl-, n-Butyl-, i-Butyl-, Hexyl-, Octyl-, Dodecyl-, Octadecyl-, 2-Phenylpropyl- und 3-Chlorpropylreste. Besonders bevorzugt sind Alkylreste mit 2 bis 10 Kohlenstoffatomen.

Die Reste $R^1$ sind gleiche oder verschiedene niedere Alkylreste mit 1 bis 4 Kohlenstoffatomen oder Phenylreste. Vorzugsweise sind mindestens 90 % der Reste $R^1$ Methylreste.

Unter dem Begriff epoxyfunktioneller Reste werden erfindungsgemäß Reste verstanden, welche über eine SiC-Bindung an das Siloxangerüst gebunden sind und eine Epoxygruppe aufweisen. Bevorzugte Beispiele epoxyfunktioneller Reste $R^3$ sind die Reste

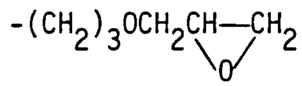 , 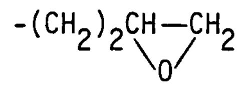 ,

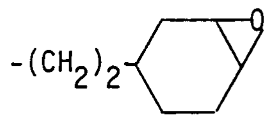 , 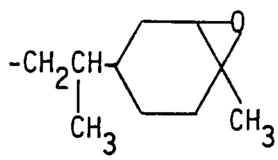 , 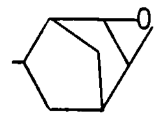 ,

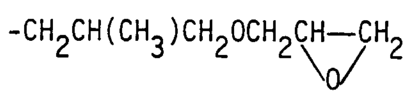 , 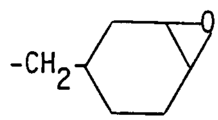 ,

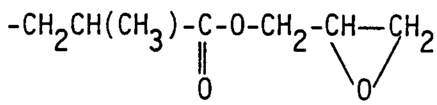

In den epoxyfunktionellen Polysiloxanen der Formel I können Reste $R^3$ enthalten sein, die die Bedeutung eines Wasserstoffrestes haben. Diese Wasserstoffreste stammen von den als Ausgangsverbindungen zur Herstellung der epoxyfunktionellen Polysiloxane verwendeten Wasserstoffpolysiloxane. Jedoch sollen nicht mehr als insgesamt 30 % der Reste $R^3$ Alkylreste mit 2 bis 20 Kohlenstoffatomen oder Wasserstoffreste sein.

Die Kettenlänge und der Verzweigungsgrad der Polysiloxane werden durch die Werte von a und b gegeben. a hat einen Wert von 1 bis 1000; b hat einen Wert von 0 bis 10. Besonders bevorzugt sind Polysiloxane, bei denen a einen Wert von 5 bis 200 und b einen Wert von 0 bis 2 hat. Insbesondere bevorzugt sind unverzweigte Produkte, also Produkte mit einem b-Wert von 0.

Beispiele erfindungsgemäßer Polysiloxane mit über SiC-Gruppen gebundenen (Meth)-acrylsäureestergruppen sind

Verbindung 1

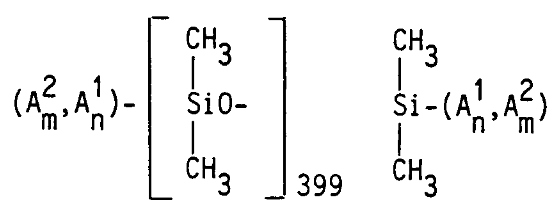

$A^1$ = 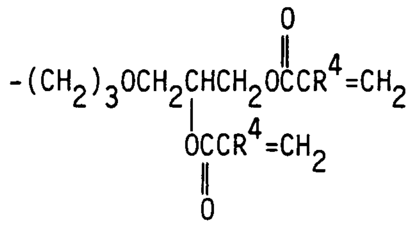

$A^2$ = 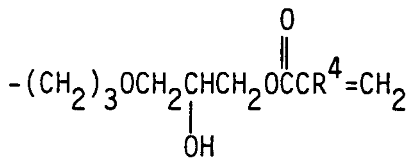 oder

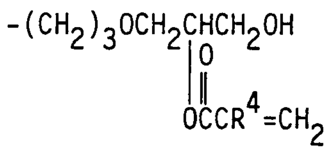

wobei

m = 0,8

n = 0,2 und

$R^4$ = H oder $CH_3$ ist.

Verbindung 2

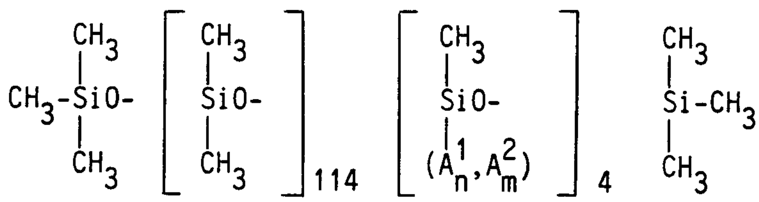

$A^1$, $A^2$, n und m wie bei Verbindung 1 definiert.

Verbindung 3

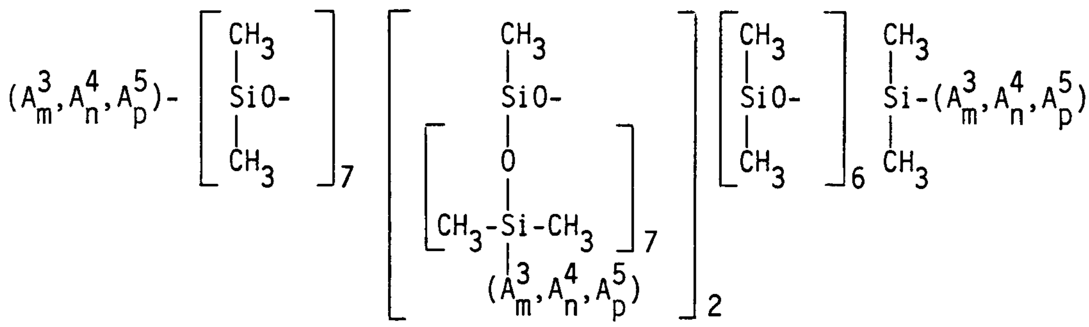

$A^3$ = 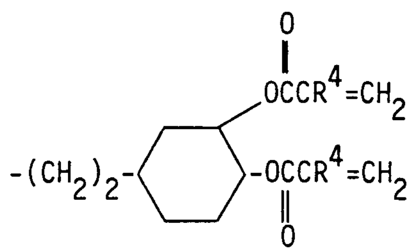

$A^4$ = 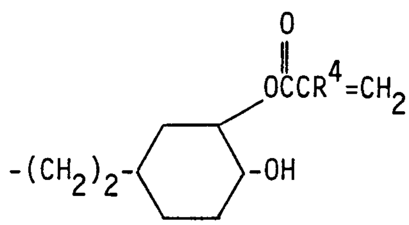 oder 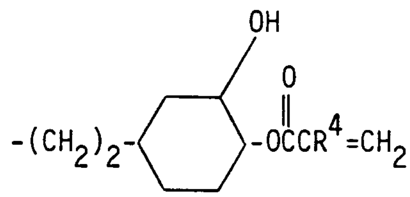

$A^5$ = 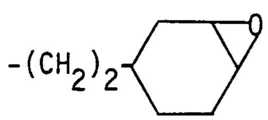

wobei

m = 0,4
n = 0,5
p = 0,1 und
$R^4$ = H oder $CH_3$ ist.

Verbindung 4

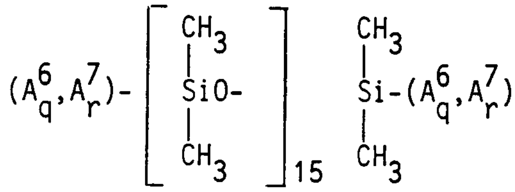

$A^6$ = 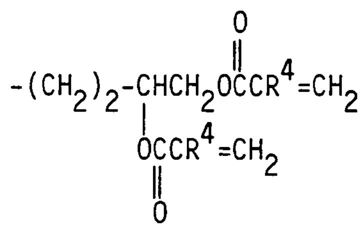

$A^7$ = 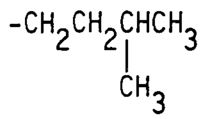

wobei

q = 0,9
r = 0,1 und
$R^4$ = H oder $CH_3$ ist.

Verbindung 5

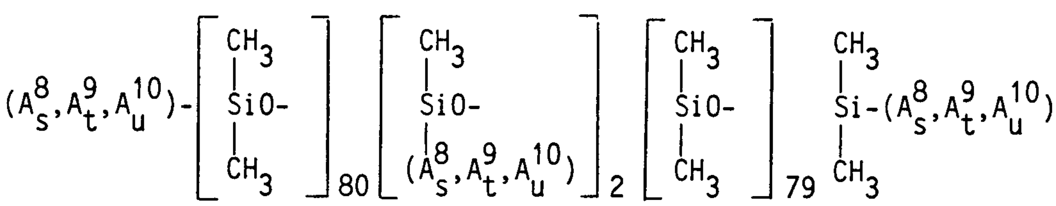

$A^8$ = 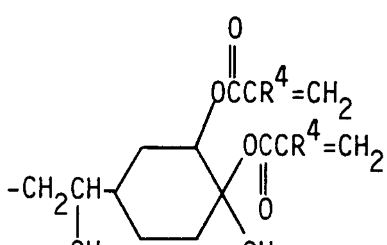

$A^9$ = 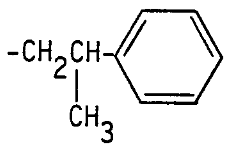

$A^{10}$ = 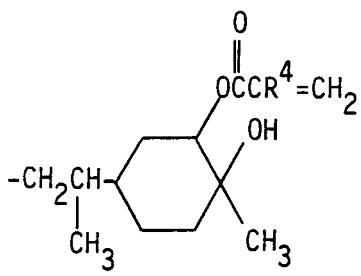 oder 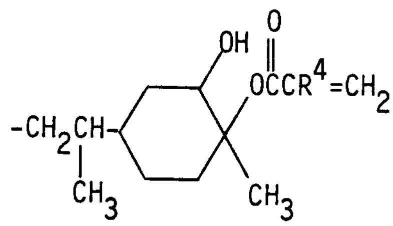

wobei

s = 0,6
t = 0,3
u = 0,1 und
$R^4$ = H oder $CH_3$ ist.

Verbindung 6

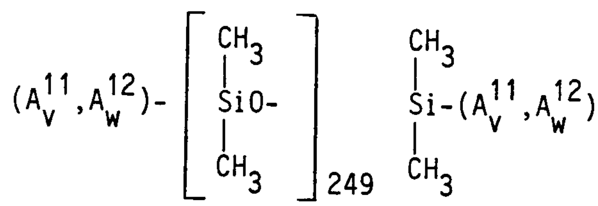

$A^{11}$ = 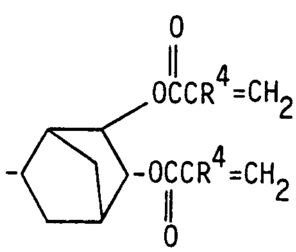

$A^{12}$ = 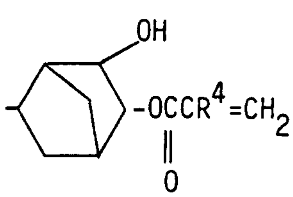

wobei

v = 0,6
w = 0,4 und
$R^4$ = H oder $CH_3$ ist.

Die erfindungsgemäßen Polysiloxane können in aus dem Stand der Technik bekannter Weise hergestellt werden. Man geht dabei von Polysiloxanen der Formel I aus, bei denen $R^2$ ein Wasserstoffrest ist. Die Umsetzung der Wasserstoffsiloxane mit Epoxyden, welche eine zur Addition an SiH-Gruppen befähigte olefinische Bindung aufweisen, ist, wie oben ausgeführt, z.B. in der Zeitschrift "Makromolekulare Chemie" (Rapid Communication), 7, (1986), 703 bis 707, beschrieben. Für den Fall, daß bis zu 30 % der Reste $R^3$ Alkylreste mit 2 bis 20 Kohlenstoffatomen sind, können zusammen mit den Epoxyden oder in einem getrennten Verfahrensschritt die olefinischen Kohlenwasserstoffe mit 2 bis 20 Kohlenstoffatomen angelagert werden.

Die so erhaltenen Ausgangsverbindungen der Formel I werden nun mit dem Gemisch aus (Meth)-acrylsäureanhydrid und (Meth)acrylsäure in den angegebenen Mengenrelationen, gegebenenfalls in Gegenwart von Lösungsmitteln, wie z.B. Toluol, bei erhöhten Temperaturen, insbesondere Temperaturen von 80 bis 150 °C, zu den entsprechenden Estern umgesetzt.

Die Esterbildung kann durch übliche, vorzugsweise basische Katalysatoren, wie z.B. Erdalkalioxyde, Amine oder Metallsalze, beschleunigt werden. Saure Katalysatoren sind wegen möglicher ringöffnender Nebenreaktionen der Epoxydgruppen weniger geeignet. Da die Esterbindung nach den allgemeinen, hierfür bekannten Regeln erfolgt, kann auf die üblichen Handbücher zur organischen Synthese verwiesen werden.

Ein weiterer Gegenstand der Erfindung besteht in der Verwendung der erfindungsgemäßen Polysiloxane als strahlenhärtbare abhäsive Beschichtungsmittel für flächige Träger. Die erfindungsgemäßen Produkte können als solche direkt verwendet werden. Es ist lediglich im Falle der UV-Härtung notwendig, den modifizierten Polysiloxanen einen Radikalstarter zuzusetzen. Die Zugabe erfolgt z.B. in Mengen von 2 bis 5 Gew.-%, bezogen auf Siloxan.

Die Wahl des Radikalstarters sollte sich am Wellenlängenspektrum der zur Aushärtung verwendeten Strahlenquelle orientieren. Derartige Radikalstarter sind bekannt. Beispiele solcher Radikalstarter sind Benzophenon, dessen Oxime oder Benzoinether.

Es ist möglich, die so erhaltenen Beschichtungsmassen in an sich bekannter Weise noch durch Zusatz weiterer Produkte zu modifizieren. Derartige bekannte Modifizierungsmittel sind Siloxane mit Gruppen, welche bei der Aushärtung der Beschichtungsmasse in diese chemisch eingebaut werden. Besonders geeignete Modifizierungsmittel sind Siloxane mit an Si-Atome gebundenen Wasserstoffatomen. Diese können u.a. eine Erniedrigung der Viskosität der Beschichtungsmasse bewirken, wodurch ihre Auftragbarkeit auf flächige Träger verbessert wird.

Es ist ferner möglich, den Beschichtungsmitteln Zusatzmittel zuzugeben, die als inerte Substanzen von der Beschichtungsmasse bei der Erhärtung umschlossen werden. Beispiele solcher in der Beschichtungsmasse verteilten Substanzen sind hochdisperse Kieselsäure oder Polymerisate aus Fluorkohlenwasserstoffen.

In den folgenden Beispielen werden die Herstellung erfindungsgemäßer mit (Meth)-acrylsäureestergruppen modifizierter Polysiloxane sowie deren anwendungstechnische Eigenschaften beschrieben.

Beispiel 1

Zu 248 g (2 Mol) Vinylcyclohexenoxyd und 40 ml einer Lösung von 4 mg $H_2PtCl_6 \cdot 6\,H_2O$ in 3 ml Glykoldimethylether in einem 4 -l-Dreihalskolben werden bei 90 °C 1170 g (1 Mol) eines SiH-Gruppen enthaltenden Polydimethylsiloxans der durchschnittlichen Formel

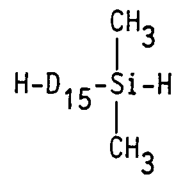

D = 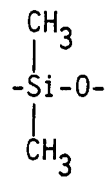

zugetropft. Nach 7 h bei 100 ° C werden zu dem so erhaltenen epoxyfunktionellen Polydimethylsiloxan der durchschnittlichen Formel

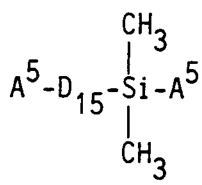

$A^5$ wie in Verbindung 3 definiert,
500 g Toluol, 8 g 1,4-Diazabicyclo(2,2,2)octan und 0,2 g Hydrochinon gegeben. Anschließend wird ein Gemisch aus 130 g (1,8 Mol) Acrylsäure und 12,6 g (0,2 Mol) Acrylsäureanhydrid so zugetropft, daß eine Temperatur von 120 ° C nicht überschritten wird. Nach 30 h bei 100 ° C werden nach Destillation (100 ° C, 60 Torr) und Filtration 1440 g (93 % der Theorie) eines rotbraunen, mittelviskosen Öls erhalten, das nach dem $^1$H-NMR-Spektrum die allgemeine Formel

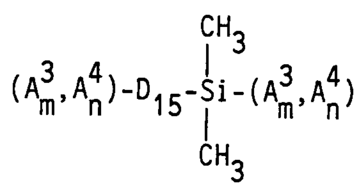

$A^3$ und $A^4$ wie in Verbindung 3 definiert ($R^4$ = H),
m = 0,1,
n = 0,9,
aufweist.

Beispiel 2 (nicht erfindungsgemäß)

Analog Beispiel 1 werden aus 22,8 g (0,2 Mol) Allylglycidylether und 368,6 g (0,1 Mol) eines SiH-Gruppen enthaltenden Polydimethylsiloxans der durchschnittlichen Formel

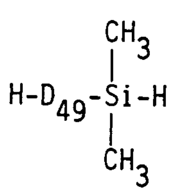

ein epoxyfunktionelles Polydimethylsiloxan der durchschnittlichen Formel

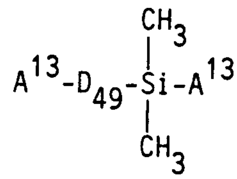

$A^{13}$ = 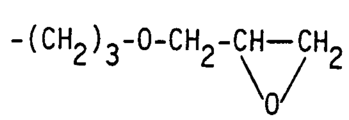

hergestellt. Wird das erhaltene Produkt analog zu Beispiel 1 mit 17,3 g (0,24 Mol) Acrylsäure umgesetzt, erhält man nach 40 h bei 100 ° C und analoger Aufarbeitung 365 g (90 % der Theorie) eines rotbraunen Öls, das nach dem $^1$H-NMR-Spektrum die durchschnittliche Formel

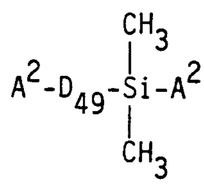

$A^2$ wie in Verbindung 2 definiert ($R^4$ = H),
aufweist.

Beispiel 3

In einem 500-ml-Dreihalskolben werden 100 g (27 mMol) des in Beispiel 2 hergestellten epoxyfunktionellen Polydimethylsiloxans der allgemeinen Formel

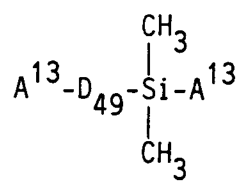

$A^{13}$ wie in Beispiel 2 definiert,
6,1 g (48,6 mMol) Acrylsäureanhydrid und 0,4 g (5,4 mMol) Acrylsäure, 1,0 g Diazabicyclo(2,2,2)octan und 0,05 g Hydrochinon gegeben und auf 100 ° C erhitzt. Nach 20 h bei dieser Temperatur werden nach Filtration 98,4 g (92 % der Theorie) eines acrylatfunktionellen Polydimethylsiloxans der durchschnittlichen Formel

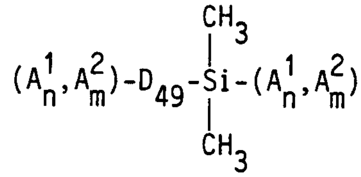

$A^1$, $A^2$ wie in Verbindung 2 definiert ($R^4$ = H),
n = 0,9,
m = 0,1,

erhalten.

Beispiel 4

Analog zu Beispiel 3 werden 100 g (27 mMol) des epoxyfunktionellen Polydimethylsiloxans

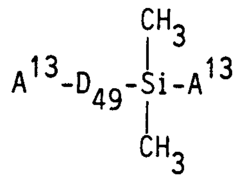

$A^{13}$ wie in Beispiel 2 definiert,
mit einem Gemisch aus 3,4 g (27 mMol) Acrylsäureanhydrid und 2,0 g (27 mMol) Acrylsäure umgesetzt. Nach 25 h bei 100°C werden nach Filtration 94,8 g (90 % der Theorie) eines acrylatfunktionellen Polydimethylsiloxans der durchschnittlichen Formel

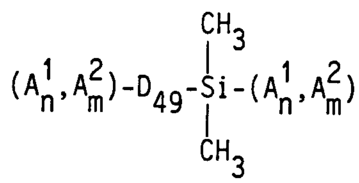

$A^1$, $A^2$ wie in Verbindung 2 definiert ($R^4$ = H),
n = 0,5,
m = 0,5,
isoliert.

Beispiel 5

Analog zu Beispiel 1 wird aus 20,5 g (180 mMol) Allylglycidylether, 2,4 g (20 mMol) $\alpha$-Methylstyrol und 368,6 g (100 mMol) eines SiH-Gruppen enthaltenden Polydimethylsiloxans der durchschnittlichen Formel

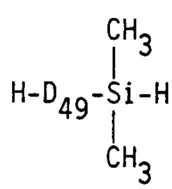

ein Polydimethylsiloxan der durchschnittlichen Formel

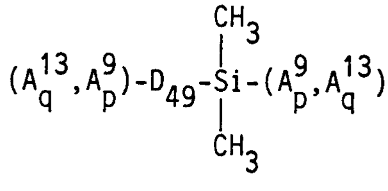

$A^9$ wie in Verbindung 5 definiert,

$A^{13}$ wie in Beispiel 2 definiert,
q = 0,9,
p = 0,1,
hergestellt. Anschließend wird das erhaltene Polydimethylsiloxan analog zu Beispiel 3 mit 2,1 g (162 mMol) Acrylsäureanhydrid und 0,13 g (18 mMol) Acrylsäure umgesetzt. Nach 20 h bei 100 °C werden zu dem Reaktionsgemisch 1110 g (3,75 Mol) Octamethylcyclotetrasiloxan und 7,5 g konzentrierte Schwefelsäure zugegeben und bei 100 °C äquilibriert. Nach 10 h ist kein Viskositätsanstieg mehr meßbar. Das Reaktionsgemisch wird mit 75 g $Na_2CO_3$ neutralisiert, und man erhält ein hochviskoses Öl der durchschnittlichen Formel

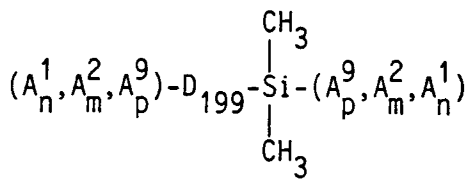

$A^1$, $A^2$ wie in Verbindung 1 definiert ($R^4$ = H),
n = 0,81,
m = 0,1,
p = 0,09,
Ausbeute: 1218 g (81 % der Theorie).

<u>Beispiel 6</u>

Analog zu Beispiel 1 werden zu einem Gemisch aus 54,7 g (360 mMol) Limonenoxyd, 3,4 g (40 mMol) 1-Hexen und 8 ml Katalysatorlösung 200 g (100 mMol) eines SiH-Gruppen enthaltenden Polydimethylsiloxans der durchschnittlichen Formel

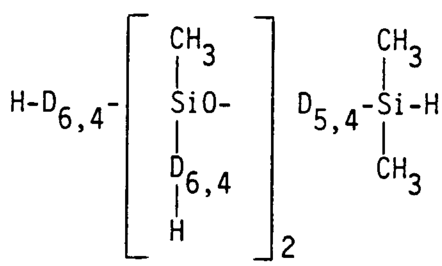

zugetropft. Nach 7 h bei 100 °C werden zum Reaktionsgemisch 100 g Toluol, 1,6 g 1,4-Diazabicyclo(2,2,2)-octan und 0,04 g Hydrochinon gegeben. Anschließend wird bei 100 °C ein Gemisch aus 17,3 g (240 mMol) Acrylsäure und 10,0 g (80 mMol) Acrylsäureanhydrid zugetropft. Nach 30 h und analoger Aufarbeitung werden 239 g (85 % der Theorie) eines Öls erhalten, das die durchschnittliche Formel

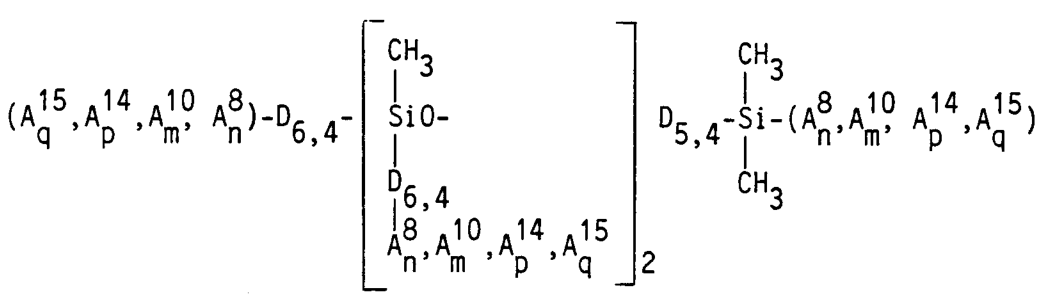

$A^8$, $A^{10}$ wie in Verbindung 5 definiert ($R^4$ = H),
$A^{14}$ = $-(CH_2)_5-CH_3$ ,

$A^{15}$ = 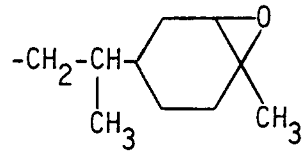

n = 0,2,
m = 0,6,
p = 0,1 und
q = 0,1,
aufweist.

Beispiel 7

Analog zu Beispiel 2 wird aus 22,8 g (0,2 Mol) Allylglycidylether und 441,9 g (0.05 Mol) eines SiH-Gruppen enthaltenden Polydimethylsiloxans der durchschnittlichen Formel

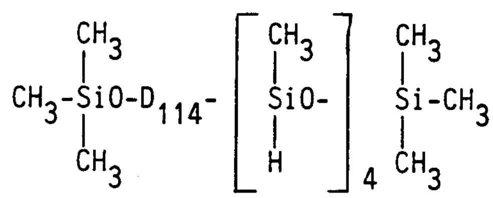

ein epoxyfunktionelles Polydimethylsiloxan der durchschnittlichen Formel

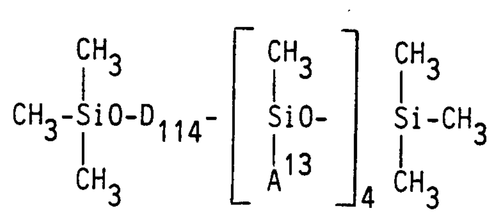

$A^{13}$ wie in Beispiel 2 definiert,
hergestellt.

Anschließend wird das erhaltene Polydimethylsiloxan mit 20,2 g (0,16 Mol) Acrylsäureanhydrid und 2,9 g (0.04 Mol) Acrylsäure umgesetzt. Nach 20 h bei 100 °C wird filtriert und man erhält 450,2 g (96,9 % der Theorie) eines mittelviskosen Öls der durchschnittlichen Formel

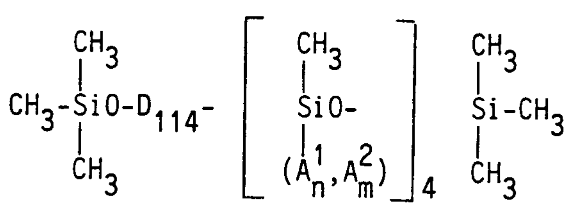

$A^1$, $A^2$ wie in Verbindung 1 definiert ($R^4$ = H),
n = 0,8,
m = 0,2.

Anwendungstechische Prüfungen

Zur Überprüfung der anwendungstechnischen Eigenschaften werden die über SiC-Gruppen gebundenen Acrylsäureestergruppen enthaltenden Polydimethylsiloxane der Beispiele 1, 3, 4, 5, 6 und 7, die dem Stand der Technik entsprechen, auf unterschiedliche flächige Träger (OPP-Folie, satiniertes Papier) appliziert und bei 1,5 Mrad durch Elektronenstrahlen gehärtet. Die Auftragsmenge beträgt ca. 1,1 g/m$^2$. Als Prüfkleber werden zwei Acrylatkleber (Tesa 154 und Tesa 970) und ein Kautschukkleber (Tesa 758) verwendet. Zur Messung der Abhäsivität werden 30 mm briete Klebebänder aufgewalzt und anschließend bei 70 ° C gelagert. Nach 24 h wird die Kraft gemessen, die benötigt wird, um das Klebeband unter einem Schälwinkel von 180 ° vom Untergrund abzuziehen. Diese Kraft wird als Trennkraft bezeichnet. Außerdem erfolgt eine Prüfung der Adhäsion auf dem Substrat durch kräftiges Reiben mit dem Daumen. Bei mangelnder Haftung bilden sich gummiartige Krümel (sogenannter "rub off"-Test).

Tabelle

| mod. Siloxan Beispiel | Trennkraft [N] | | | | | | | |
|---|---|---|---|---|---|---|---|---|
| | Papier | | | | OPP-Folie | | | |
| | Tesa 154 | Tesa 970 | Tesa 758 | rub off | Tesa 154 | Tesa 970 | Tesa 758 | rub off |
| 1 | 7 | 10 | 9 | nein | 6 | 10 | 9 | nein |
| 2 1) 2) | 0 | 0 | 0 | - | 0 | 0 | 0 | - |
| 3 | 0,5 | 1,5 | 1,4 | nein | 0,2 | 1,1 | 1,0 | nein |
| 4 | 1,8 | 2,8 | 2,5 | nein | 1,5 | 2,5 | 2,2 | nein |
| 5 | 0,1 | 0,15 | 0,15 | nein | 0,1 | 0,15 | 0,15 | nein |
| 6 | 6 | 8 | 8 | nein | 5 | 8 | 9 | nein |
| 7 | 1 | 2 | 1,6 | nein | 0,6 | 1,7 | 1,3 | nein |

1) nicht erfindungsgemäß
2) nicht ausgehärtet

Aus der Tabelle ergibt sich, daß durch die Wahl der (Meth)acrylsäureester modifizierten Organopolysiloxane, wenn sie gemäß vorliegender Erfindung aufgebaut sind, Beschichtungsmassen erhalten werden, die das gewünschte Eigenschaftsprofil aufweisen.

**Patentansprüche**
**Patentansprüche für folgende Vertragsstaaten : BE, DE, FR, GB, IT, NL**

1. Polysiloxane mit über SiC-Gruppen gebundenen (Meth)acrylsäureestergruppen, erhältlich durch Umsetzung von epoxyfunktionellen Polysiloxanen der allgemeinen Formel

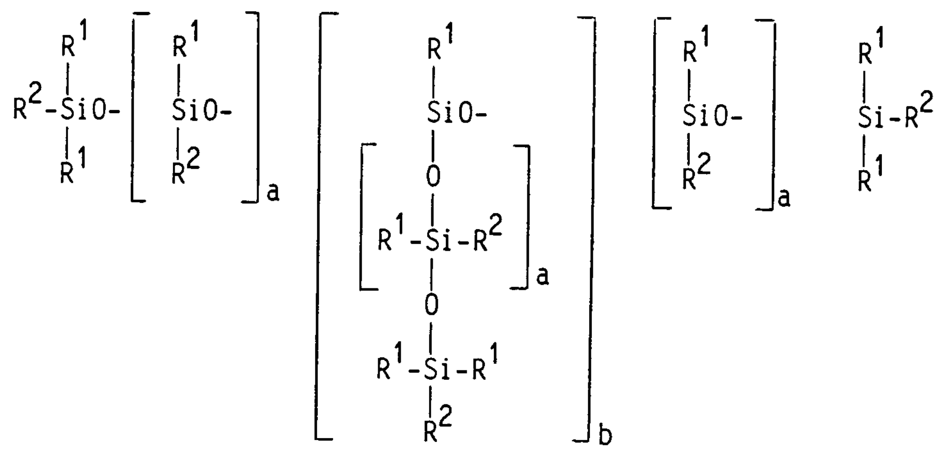

wobei

$R^1$ gleiche oder verschiedene niedere Alkylreste mit 1 bis 4 Kohlenstoffatomen oder Phenylreste sind,

$R^2$ gleich $R^1$ oder den Rest $R^3$ bedeutet, wobei die Reste $R^3$
zu 70 bis 100 % epoxyfunktionelle Reste und
zu 30 bis 0 % Alkylreste mit 2 bis 10 Kohlenstoffatomen oder Wasserstoffreste sind,
mit der Maßgabe, daß im durchschnittlichen Molekül mindestens 1,5 Epoxygruppen enthalten sind,

a einen Wert von 1 bis 1000 und

b einen Wert von 0 bis 10 hat,

mit solchen Mengen eines Säuregemisches, bestehend aus 10 bis 90 Mol-% (Meth)acrylsäureanhydrid und 90 bis 10 Mol-% (Meth)acrylsäure, wobei die Summe 100 Mol-% ergeben muß, daß auf n Epoxydäquivalente 0,8 bis 1,9 n Säureäquivalente entfallen, bei erhöhten Temperaturen, gegebenenfalls in Gegenwart von Lösungsmitteln und üblichen Veresterungskatalysatoren.

**2.** Polysiloxane nach Anspruch 1, dadurch gekennzeichnet, daß 5 bis 15 % der Reste $R^3$ Alkylreste mit 2 bis 10 Kohlenstoffatomen sind.

**3.** Polysiloxane nach Anspruch 1 oder 2, dadurch gekennzeichnet, daß sie durch Umsetzung mit solchen Mengen eines Säuregemisches, daß auf n Epoxydäquivalente 1,1 bis 1,9 Säureäquivalente entfallen, erhältlich sind.

**4.** Polysiloxane nach Anspruch 1, 2 oder 3, erhältlich durch Umsetzung von epoxyfunktionellen Polysiloxanen, bei denen a einen Wert von 5 bis 200 und b einen von 0 bis 2 hat.

**5.** Polysiloxane nach Anspruch 1, 2 oder 3, erhältlich durch Umsetzung von epoxyfunktionellen Polysiloxanen, bei denen b einen Wert von 0 hat.

**6.** Polysiloxane nach einem oder mehreren der vorhergehenden Ansprüche, erhältlich durch Umsetzung von epoxyfunktionellen Polysiloxanen, bei denen mindestens 90 % der Reste $R^1$ Methylreste sind.

**7.** Polysiloxane nach einem oder mehreren der vorhergehenden Ansprüche, erhältlich durch Umsetzung von Polysiloxanen, deren epoxyfunktionelle Reste $R^3$ aus der Gruppe

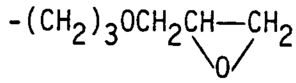 , 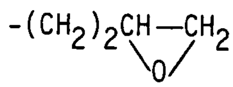 ,

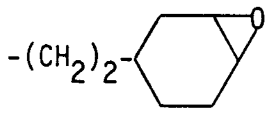 , 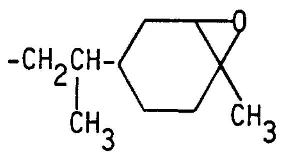 , 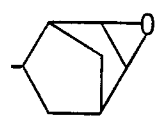 ,

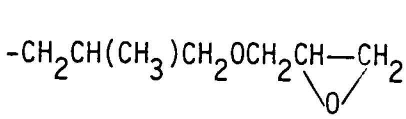 , 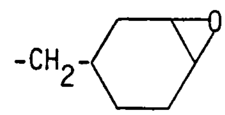 ,

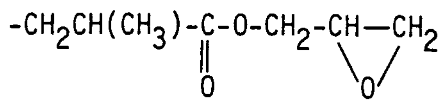

ausgewählt sind.

8. Polysiloxane nach einem oder mehreren der vorhergehenden Ansprüche, erhältlich durch Umsetzung von Polysiloxanen, deren Reste $R^3$, falls sie Alkylreste sind, aus der Gruppe Ethyl-, Propyl-, n-Butyl-, i-Butyl-, Hexyl-, Octyl-, Dodecyl-, Octadecyl-, 2-Phenylpropyl-, 3-Chlorpropyl- ausgewählt sind.

9. Verwendung der Polysiloxane nach Ansprüchen 1 bis 8 als strahlenhärtbare abhäsive Beschichtungsmittel für flächige Träger.

**Patentansprüche für folgenden Vertragsstaat : ES**

1. Verfahren zur Herstellung von Polysiloxanen mit über SiC-Gruppen gebundenen (Meth)-acrylsäureestergruppen, dadurch gekennzeichnet, daß man epoxyfunktionelle Polysiloxane der allgemeinen Formel

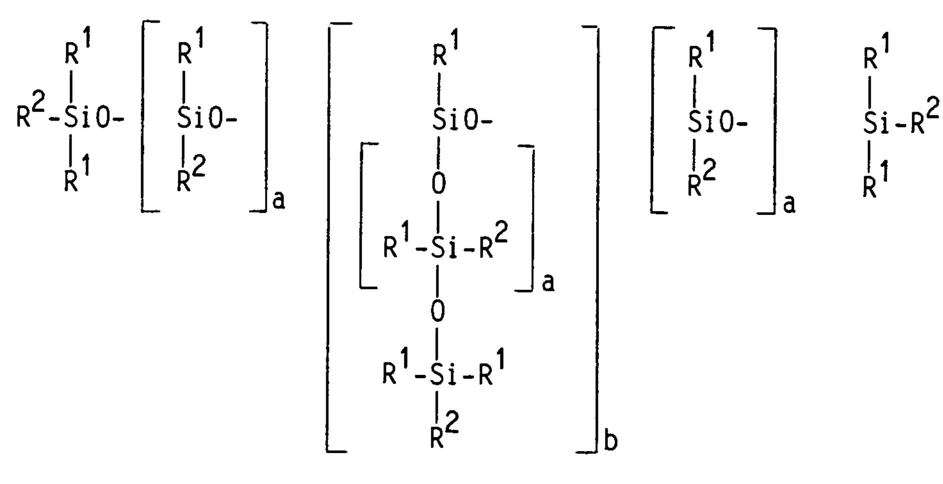

wobei

$R^1$ gleiche oder verschiedene niedere Alkylreste mit 1 bis 4 Kohlenstoffatomen oder Phenylreste sind,

$R^2$ gleich $R^1$ oder den Rest $R^3$ bedeutet, wobei die Reste $R^3$
zu 70 bis 100 % epoxyfunktionelle Reste und
zu 30 bis 0 % Alkylreste mit 2 bis 10 Kohlenstoffatomen oder Wasserstoffreste sind,
mit der Maßgabe, daß im durchschnittlichen Molekül mindestens 1,5 Epoxygruppen enthalten sind,

a einen Wert von 1 bis 1000 und

b einen Wert von 0 bis 10 hat,

mit solchen Mengen eines Säuregemisches, bestehend aus 10 bis 90 Mol-% (Meth)acrylsäureanhydrid und 90 bis 10 Mol-% (Meth)acrylsäure, wobei die Summe 100 Mol-% ergeben muß, daß auf n Epoxydäquivalente 0,8 bis 1,9 n Säureäquivalente entfallen, bei erhöhten Temperaturen, gegebenenfalls in Gegenwart von Lösungsmitteln und üblichen Veresterungskatalysatoren, in an sich bekannter Weise umsetzt.

**2.** Verfahren nach Anspruch 1, dadurch gekennzeichnet, daß man Polysiloxane umsetzt, bei denen 5 bis 15 % der Reste $R^3$ Alkylreste mit 2 bis 10 Kohlenstoffatomen sind.

**3.** Verfahren nach Anspruch 1 oder 2, dadurch gekennzeichnet, daß man die Polysiloxane mit solchen Mengen eines Säuregemisches, daß auf n Epoxydäquivalente 1,1 bis 1,9 Säureäquivalente entfallen, umsetzt.

**4.** Verfahren nach Anspruch 1, 2 oder 3, dadurch gekennzeichnet, daß man Polysiloxane umsetzt, bei denen a einen Wert von 5 bis 200 und b einen Wert von 0 bis 2 hat.

**5.** Verfahren nach Anspruch 1, 2 oder 3, dadurch gekennzeichnet, daß man Polysiloxane umsetzt, bei denen b einen Wert von 0 hat.

**6.** Verfahren nach einem oder mehreren der vorhergehenden Ansprüche, dadurch gekennzeichnet, daß man Polysiloxane umsetzt, bei denen mindestens 90 % der Reste $R^1$ Methylreste sind.

**7.** Verfahren nach einem oder mehreren der vorhergehenden Ansprüche, dadurch gekennzeichnet, daß man Polysiloxane umsetzt, deren epoxyfunktionelle Reste $R^3$ aus der Gruppe

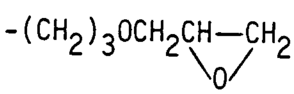 , 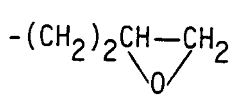 ,

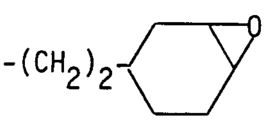 , 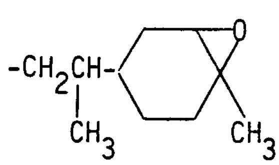 , 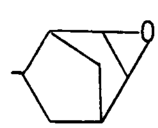 ,

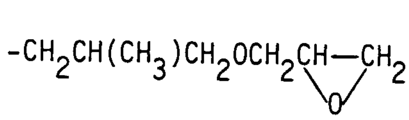 , 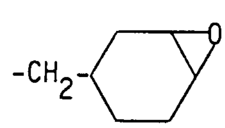 ,

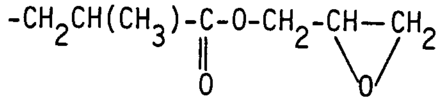

ausgewählt sind.

**8.** Verfahren nach einem oder mehreren der vorhergehenden Ansprüche, dadurch gekennzeichnet, daß man Polysiloxane umsetzt, deren Reste $R^3$, falls sie Alkylreste sind, aus der Gruppe Ethyl-, Propyl-, n-Butyl-, i-Butyl-, Hexyl-, Octyl-, Dodecyl-, Octadecyl-, 2-Phenylpropyl-, 3-Chlorpropyl- ausgewählt sind.

**9.** Verwendung der Polysiloxane nach Ansprüchen 1 bis 8 als strahlenhärtbare abhäsive Beschichtungsmittel für flächige Träger.

## Claims

**Claims for the following Contracting States : BE, DE, FR, GB, IT, NL**

**1.** Polysiloxanes containing (meth)acrylate groups bonded via SiC groups, obtainable by reaction of epoxy-functional polysiloxanes of the general formula

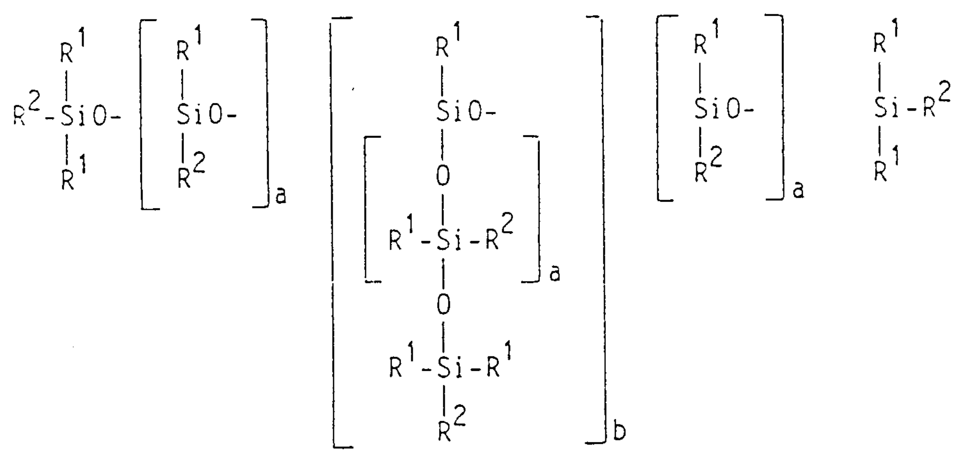

where

$R^1$ are identical or different lower alkyl radicals having 1 to 4 carbon atoms or phenyl radicals,

$R^2$ is identical to $R^1$ or is the radical $R^3$, where
from 70 to 100 % of the radicals $R^3$ are epoxy-functional radicals and
from 30 to 0 % of the radicals $R^3$ are alkyl radicals having 2 to 10 carbon atoms or hydrogen radicals,
with the proviso that the average molecule contains at least 1.5 epoxy groups,

a has a value of from 1 to 1000, and

b has a value of from 0 to 10,

with such amounts of an acid mixture comprising from 10 to 90 mol-% of (meth)acrylic anhydride and from 90 to 10 mol-% of (meth)acrylic acid, where the sum must give 100 mol-%, that from 0.8 to 1.9 n acid equivalents are present per n epoxide equivalents, at elevated temperature, if desired in the presence of solvents and conventional esterification catalysts.

**2.** Polysiloxanes according to Claim 1, characterised in that from 5 to 15 % of the radicals $R^3$ are alkyl radicals having 2 to 10 carbon atoms.

**3.** Polysiloxanes according to Claim 1 or 2, characterised in that the polysiloxanes are obtainable by reaction with such amounts of an acid mixture that from 1.1 to 1.9 acid equivalents are present per n epoxide equivalents.

**4.** Polysiloxanes according to Claim 1, 2 or 3, obtainable by reaction of epoxy-functional polysiloxanes, in which a has a value of from 5 to 200 and b has a value of from 0 to 2.

**5.** Polysiloxanes according to Claim 1, 2 or 3, obtainable by reaction of epoxy-functional polysiloxanes, in which b has a value of 0.

**6.** Polysiloxanes according to one or more of the preceding claims, obtainable by reaction of epoxy-functional polysiloxanes, in which at least 90 % of the radicals $R^1$ are methyl radicals.

**7.** Polysiloxanes according to one or more of the preceding claims, obtainable by reaction of polysiloxanes whose epoxy-functional radicals $R^3$ are selected from the group comprising

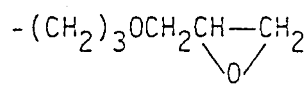 , 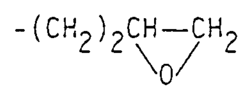 ,

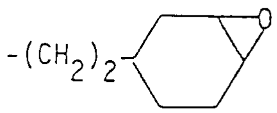 , 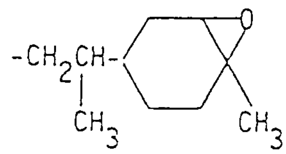 , 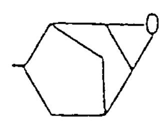 ,

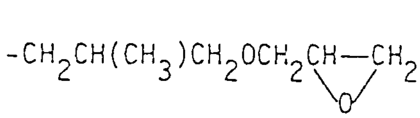 , 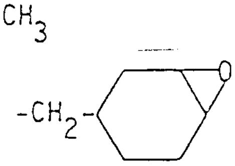 ,

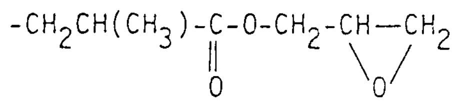

**8.** Polysiloxanes according to one or more of the preceding claims, obtainable by reaction of polysiloxanes whose radicals $R^3$, if they are alkyl radicals, are selected from the group comprising ethyl, propyl, n-butyl, i-butyl, hexyl, octyl, dodecyl, octadecyl, 2-phenylpropyl and 3-chloropropyl.

**9.** Use of the polysiloxanes according to Claims 1 to 8 as radiation-curable abhesive coating agents for sheet-like substrates.

**Claims for the following Contracting State : ES**

**1.** Process for the preparation of polysiloxanes containing (meth)acrylate groups bonded via SiC groups, characterised in that epoxy-functional polysiloxanes of the general formula

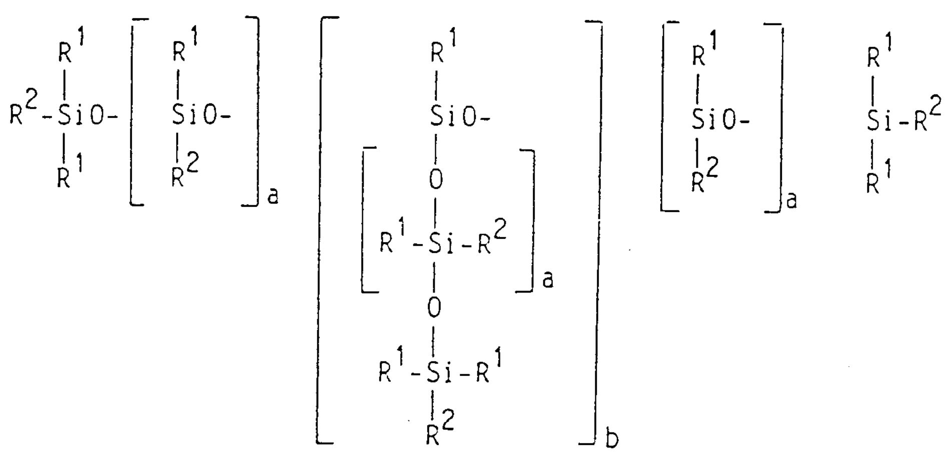

where

$R^1$ are identical or different lower alkyl radicals having 1 to 4 carbon atoms or phenyl radicals,

$R^2$ is identical to $R^1$ or is the radical $R^3$, where

from 70 to 100 % of the radicals $R^3$ are epoxy-functional radicals and
from 30 to 0 % of the radicals $R^3$ are alkyl radicals having 2 to 10 carbon atoms or hydrogen radicals,
with the proviso that the average molecule contains at least 1.5 epoxy groups,

a has a value of from 1 to 1000, and
b has a value of from 0 to 10,

are reacted in a manner known per se with such amounts of an acid mixture comprising from 10 to 90 mol-% of (meth)acrylic anhydride and from 90 to 10 mol-% of (meth)acrylic acid, where the sum must give 100 mol-%, that from 0.8 to 1.9 n acid equivalents are present per n epoxide equivalents, at elevated temperature, if desired in the presence of solvents and conventional esterification catalysts.

**2.** Process according to Claim 1, characterised in that polysiloxanes are reacted in which from 5 to 15 % of the radicals $R^3$ are alkyl radicals having 2 to 10 carbon atoms.

**3.** Process according to Claim 1 or 2, characterised in that the polysiloxanes are reacted with such amounts of an acid mixture that from 1.1 to 1.9 acid equivalents are present per n epoxide equivalents.

**4.** Process according to Claim 1, 2 or 3, characterised in that polysiloxanes are reacted in which a has a value of from 5 to 200 and b has a value of from 0 to 2.

**5.** Process according to Claim 1, 2 or 3, characterised in that polysiloxanes are reacted in which b has a value of 0.

**6.** Process according to one or more of the preceding claims, characterised in that polysiloxanes are reacted in which at least 90 % of the radicals $R^1$ are methyl radicals.

**7.** Process according to one or more of the preceding claims, characterised in that polysiloxanes are reacted whose epoxy-functional radicals $R^3$ are selected from the group comprising

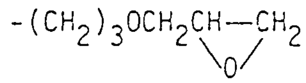 , 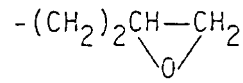 ,

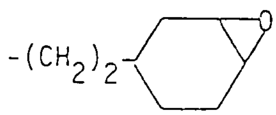 , 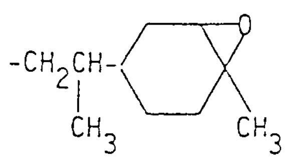 , 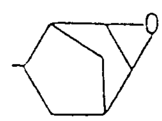 ,

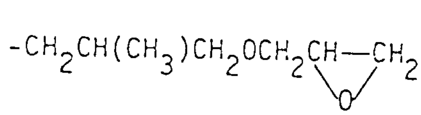 , 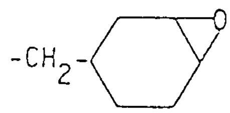 ,

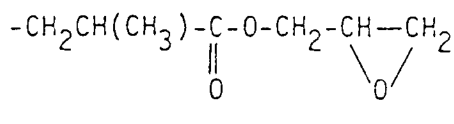

**8.** Process according to one or more of the preceding claims, characterised in that polysiloxanes are reacted whose radicals $R^3$, if they are alkyl radicals, are selected from the group comprising ethyl, propyl, n-butyl, i-butyl, hexyl, octyl, dodecyl, octadecyl, 2-phenylpropyl and 3-chloropropyl.

**9.** Use of the polysiloxanes according to Claims 1 to 8 as radiation-curable abhesive coating agents for sheet-like substrates.

**Revendications**
**Revendications pour les Etats contractants suivants : BE, DE, FR, GB, IT, NL**

1. Polysiloxanes comportant des groupes (méth)acrylates reliés par des groupes SiC, qu'on obtient en faisant réagir des polysiloxanes à fonction époxy, répondant à la formule générale

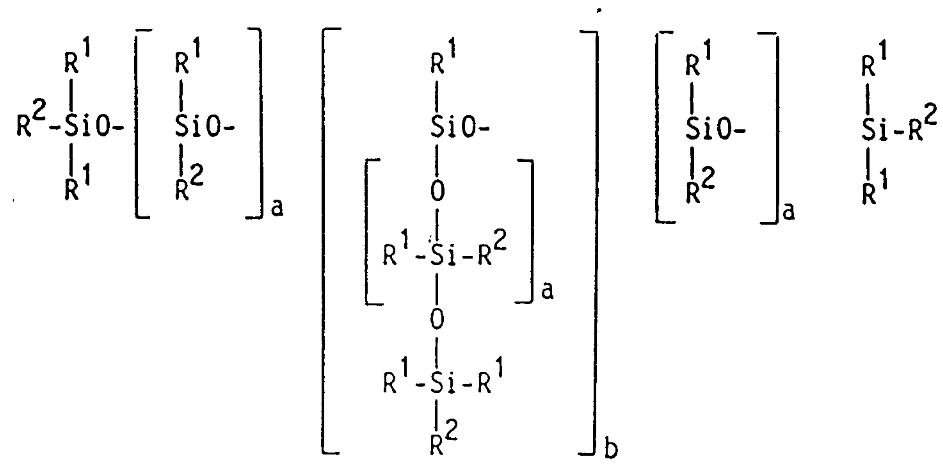

dans laquelle
   $R^1$ représente des restes alcoyle inférieurs, identiques ou différents, comportant 1 à 4 atomes de carbone, ou des restes phényle ;
   $R^2$ est identique à $R^1$ ou représente le reste $R^3$, les restes $R^3$ représentant des restes à fonction époxy pour 70 à 100 % d'entre eux et des restes alcoyle comportant 2 à 10 atomes de carbone, ou des atomes d'hydrogène, pour 30 à 0 % d'entre eux,
   à condition que la molécule contienne en moyenne au moins 1,5 groupe époxy ;
   a vaut de 1 à 1.000 ; et
   b vaut de 0 à 10,
avec un mélange d'acides, formé de 10 à 90% en moles d'anhydride (méth)acrylique et 90 à 10 % en moles d'acide (méth)acrylique, le total devant donner 100 % en moles, en une quantité telle qu'à n équivalents d'époxy correspondent 0,8 à 1,9 n, de préférence 1,1 à 1,9 n, équivalents d'acide, à une température élevée, éventuellement en présence de solvants et de catalyseurs d'estérification usuels.

2. Polysiloxanes selon la revendication 1, caractérisés en ce que 5 à 15 % des restes $R^3$ sont des restes alcoyle comportant 2 à 10 atomes de carbone.

3. Polysiloxanes selon la revendication 1 ou 2, caractérisés en ce qu'on les obtient en faisant réagir un mélange d'acides en une quantité telle qu'à n équivalents d'époxy correspondent 1,1 à 1,9 n équivalents d'acide.

4. Polysiloxanes selon la revendication 1, 2 ou 3, qu'on obtient en faisant réagir des polysiloxanes à fonction époxy dans lesquels a vaut de 5 à 200 et b vaut de 0 à 2.

5. Polysiloxanes selon la revendication 1, 2 ou 3, qu'on obtient en faisant réagir des polysiloxanes à fonction époxy dans lesquels b vaut zéro.

6. Polysiloxanes selon l'une ou plusieurs des revendications précédentes, qu'on obtient en faisant réagir des polysiloxanes à fonction époxy dans lesquels au moins 90 % des restes $R^1$ sont des restes méthyle.

7. Polysiloxanes selon l'une ou plusieurs des revendications précédentes, qu'on obtient en faisant réagir des polysiloxanes dont les restes $R^3$ à fonction époxy sont choisis dans le groupe formé de :

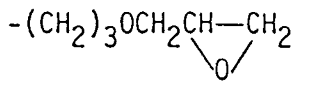 , 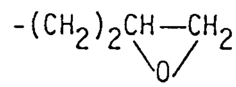 ,

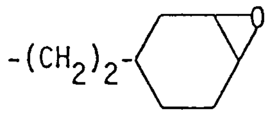 , 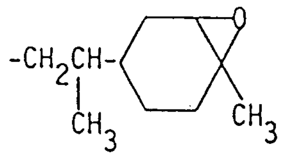 , 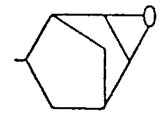 ,

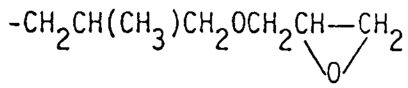 , 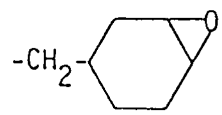 ,

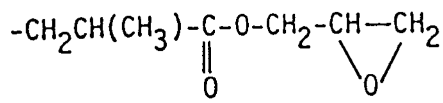

8. Polysiloxanes selon l'une ou plusieurs des revendications précédentes, qu'on obtient en faisant réagir des polysiloxanes dont les restes $R^3$, lorsqu'ils représentent des restes alcoyle, sont choisis dans le groupe formé des restes éthyle, propyle, n-butyle, i-butyle, hexyle, octyle, dodécyle, octadécyle, 2-phénylpropyle et 3-chloropropyle.

9. Utilisation des polysiloxanes selon les revendications 1 à 8 comme revêtements anti-adhésifs durcissables par rayonnement pour des substrats plats.

**Revendications pour l'Etat contractant suivant : ES**

1. Procédé de préparation de polysiloxanes comportant des groupes (méth)acrylates reliés par des groupes SiC, caractérisé en ce qu'on fait réagir, d'une manière connue en soi, des polysiloxanes à fonction époxy, répondant à la formule générale

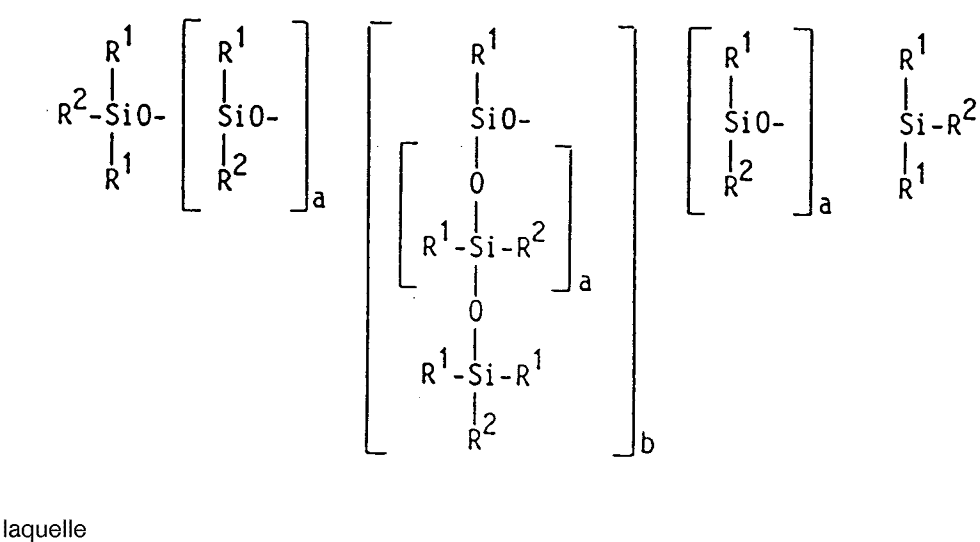

dans laquelle

$R^1$ représente des restes alcoyle inférieurs, identiques ou différents, comportant 1 à 4 atomes de carbone, ou des restes phényle ;

$R^2$ est identique à $R^1$ ou représente le reste $R^3$, les restes $R^3$ représentant des restes à fonction époxy pour 70 à 100 % d'entre eux et des restes alcoyle comportant 2 à 10 atomes de carbone, ou des atomes d'hydrogène, pour 30 à 0 % d'entre eux, à condition que la molécule contienne en moyenne au moins 1,5 groupe époxy ;

a vaut de 1 à 1.000 ; et

b vaut de 0 à 10,

avec un mélange d'acides, formé de 10 à 90% en moles d'anhydride (méth)acrylique et 90 à 10 % en moles d'acide (méth)acrylique, le total devant donner 100 % en moles, en une quantité telle qu'à n équivalents d'époxy correspondent 0,8 à 1,9 n, de préférence 1,1 à 1,9 n, équivalents d'acide, à une température élevée, éventuellement en présence de solvants et de catalyseurs d'estérification usuels.

**2.** Procédé selon la revendication 1, caractérisé en ce qu'on fait réagir des polysiloxanes dans lesquels 5 à 15 % des restes $R^3$ sont des restes alcoyle comportant 2 à 10 atomes de carbone.

**3.** Procédé selon la revendication 1 ou 2, caractérisé en ce qu'on fait réagir des polysiloxanes avec un mélange d'acides en une quantité telle qu'à n équivalents d'époxy correspondent 1,1 à 1,9 n équivalents d'acide.

**4.** Procédé selon la revendication 1, 2 ou 3, caractérisé en ce qu'on fait réagir des polysiloxanes dans lesquels a vaut de 5 à 200 et b vaut de 0 à 2.

**5.** Procédé selon la revendication 1, 2 ou 3, caractérisé en ce qu'on fait réagir des polysiloxanes dans lesquels b vaut zéro.

**6.** Procédé selon l'une ou plusieurs des revendications précédentes, caractérisé en ce qu'on fait réagir des polysiloxanes dans lesquels au moins 90 % des restes $R^1$ sont des restes méthyle.

**7.** Procédé selon l'une ou plusieurs des revendications précédentes, caractérisé en ce qu'on fait réagir des polysiloxanes dont les restes $R^3$ à fonction époxy sont choisis dans le groupe formé de :

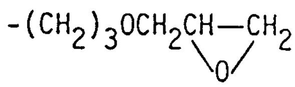 , 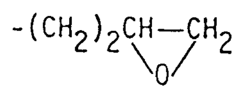 ,

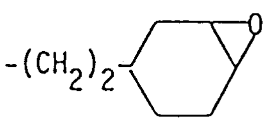 , 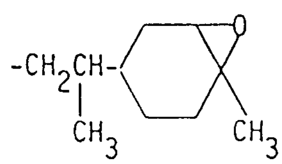 , 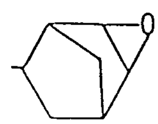 ,

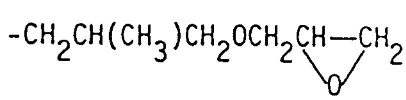 , 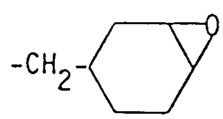 ,

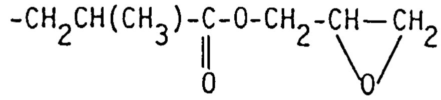

**8.** Procédé selon l'une ou plusieurs des revendications précédentes, caractérisé en ce qu'on fait réagir des polysiloxanes dont les restes $R^3$, lorsqu'ils représentent des restes alcoyle, sont choisis dans le groupe formé des restes éthyle, propyle, n-butyle, i-butyle, hexyle, octyle, dodécyle, octadécyle, 2-phénylpropyle et 3-chloropropyle.

**9.** Utilisation des polysiloxanes selon les revendications 1 à 8 comme revêtements anti-adhésifs durcissables par rayonnement pour des substrats plats.